# EUROPEAN PATENT SPECIFICATION

(11) **EP 1 247 553 B1**
(45) Date of publication and mention of the grant of the patent: **30.08.2006**
(21) Application number: 02251988.8
(22) Date of filing: 20.03.2002
(51) Int. Cl.: A63F 13/12, H04L 29/06

(54) **Network server system, method of communicating game data performed in the system, and program for executing the method**
Netzwerkserversystem, Verfahren zur Übertragung von Spieldaten in dem System sowie Programm zur Durchführung des Verfahrens
Système de serveur de réseau, procédé de transmission de donneés de jeu dans le système, et programme permettant de l'utiliser

(30) Priority: 27.03.2001 JP 2001088955; 21.11.2001 JP 2001356171
(43) Date of publication of application: 09.10.2002
(73) Proprietor: Konami Corporation, Chiyoda-ku, Tokyo 100-6330 (JP)
(72) Inventor: Horikawa, Kentaro, c/o Konami Computer, Minato-ku, Tokyo (JP)
(74) Representative: Haley, Stephen

(56) References cited:
- WO-A-99/42964
- US-A- 5 964 660
- US-A- 6 106 399
- US-A- 6 117 013
- US-A- 6 135 881

## Description

The present invention relates to a network server system, a method of communicating game data performed in the network server system, and a program for executing the game data communicating method. More specifically, the present invention relates to a method of communicating simulation game data performed in a network server system compatible with a so-called multi-platform network which may consist of different types of platforms.

Various types of simulation games, such as baseball games, soccer games, and war games, have hitherto been provided, and users derive a lot of pleasure from the games. In relation to some of these simulation games, users access a server from their platforms (i.e., terminals) by way of a network, and the users play a game on the server.

However, such a simulation game, which is to be played over the network, is limited to one which is to be played through use of platforms of the same type. The simulation game suffers a problem that the game cannot be played through use of platforms of different types (e.g., a personal computer and a game machine). An example of such a system is disclosed in WO-99-42964A.

It is therefore an object of the present invention to provide a network server system, a method of communicating game data performed in the network server system and a program for executing the method, which enable users to derive pleasure from a game through use of platforms of different types.

In order to achieve the above object, according to the present invention, there is provided a network server system according to claim 1, comprising:
at least two types of platforms (A-F);
a game management station server; and
a network, through which the platforms and the game management station server are connected; wherein,
each platform comprises:
   a data file provider, operable to prepare a data file having a single data format and including reply request data, indicating a content of the game result data to be downloaded; and
   an uploader, operable to upload the prepared data file to the game management station server via the network; and
   the game management station server comprises:
      a game executer operable to execute a game based on the data file uploaded from each of the platforms; and
      a downloader, operable to download game result data derived from the game to the respective platforms via the network,
characterised in that
the reply request data has a fixed length record irrespective of the types of the platforms and includes at least one flag which is variable in accordance with a type of each platform.

Preferably, the shared data includes a user ID based on an e-mail address, which is assigned to a player of the game.

Preferably, the reply request data includes at least another variable flag.

Preferably, a setting of the other variable flag is adapted to be determined by a player of the game.

Preferably, a setting of the at least one flag is adapted to be automatically determined in accordance with a type of each platform.

Preferably, the game management station server includes a first folder and a second folder; and
the uploaded data files are stored in the first folder and the game result data are stored in the second folder.

In order to achieve the above object, according to the present invention, there is also provided a method of communicating game data according to claim 6, comprising the steps of:
connecting at least two types of platforms (A-F) and a game management station server via a network;
preparing a data file at each of the platforms, based on a single data format including reply request data, indicating a content of the game result data to be downloaded;
uploading the prepared data file from each of the platforms to the game management station server via the network;
executing a game in the game management station server, based on the data file uploaded from each of the platforms;
determining the content of game result data to be downloaded based on the reply request data; and
downloading game result data derived from the game to the respective platforms via the network,
characterized in that:
the reply request data has a fixed-length record irrespective of the types of the platform and includes at least one flag which is variable in accordance with a type of each platform; and
the content of game result data is changed in accordance with the at least one flag, before the downloading step.

Preferably, the reply request data includes at least another variable flag which is manually set by a player of the game.

Preferably, the at least one flag is automatically set in accordance with a type of the platform to which the game result data is downloaded.

According to the present invention, there is also provided a computer readable medium, according to claim 10, having recorded thereon a program for causing a computer to execute the above game data communicating method.

### IN THE DRAWINGS

The above objects and advantages of the present invention will become more apparent by describing in detail preferred exemplary embodiments thereof with reference to the accompanying drawings, wherein:
Fig. 1 is a block diagram showing one example of the overall configuration of a net work server system according to one embodiment of the present invention;
Fig. 2 is a diagram showing the configuration of a data file;
Fig. 3 is a diagram showing functional blocks of the network server system according to the embodiment shown in Fig. 1;
Fig. 4 is a diagram showing a state in which data files are uploaded from platforms to a server in connection with the embodiment shown in Fig. 1;
Fig. 5 is a flowchart showing processing for communicating data in connection with the embodiment shown in Fig. 1; and
Fig. 6 is a diagram showing a state in which the data files are downloaded to the platforms from the server in connection with the embodiment shown in Fig. 1.

With reference to the accompanying drawings, one embodiment of the present invention will be described in detail while taking a baseball game system as one example. The baseball game is one type of so-called team management simulation game. An individual player owns his/her baseball team and causes the team to play baseball games in a game space provided on a server for competing with each other.

In more detail, in accordance with predetermined standards each player imparts, to each of baseball players constituting the baseball team within the game space on each platform, capability (e.g., hitting for power, base running skill, fielding skill, bunting skill, and cuttoff skill for a fielder; or the speed of a fastball, the power of various types of breaking balls such as a curve ball, pickoff skills, and stamina). The ability of the baseball team constituting of the baseball players imparted with capabilities on each platform are uploaded to the server in the form of data. The baseball team is caused to have a match, on the server, with an opponent baseball team uploaded from another platform, thus competing for winning or defeat.

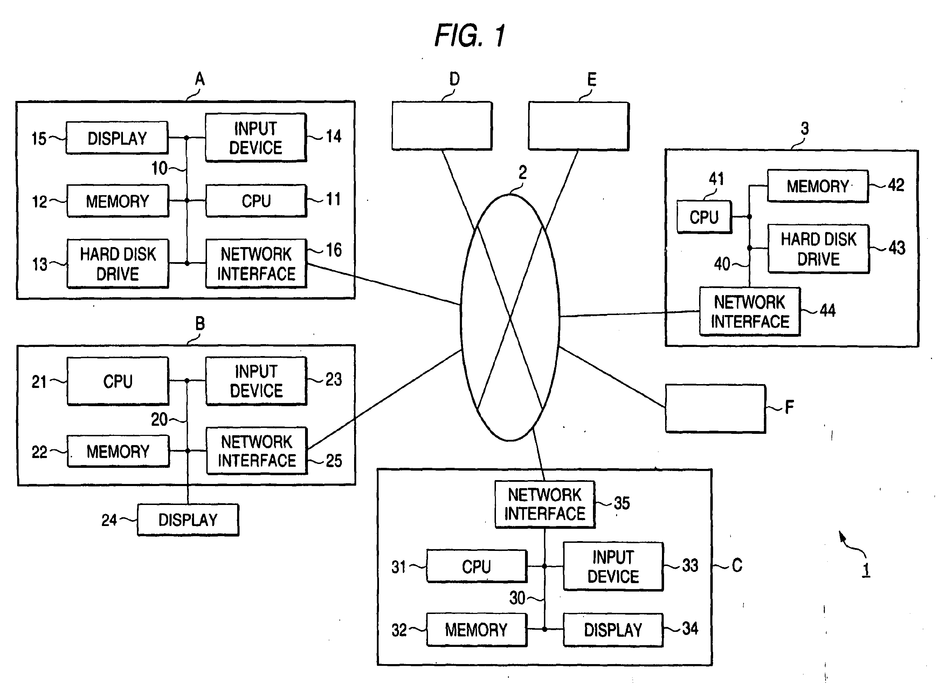

Fig. 1 is a block diagram showing an example of overall configuration of a network server system 1 according to one preferred embodiment of the present invention. A network 2, which is a communication network such as the Internet or an intranet, is connected with a plurality of platforms (i.e., terminals) A, B, C, D, E, and F and with a server 3 acting as a game management station.

The platforms A through F are composed of different types of devices; e.g., a personal computer (a desktop personal computer or a notebook personal computer), a game machine (e.g., PlayStation™, GameCube™), a portable cellular phone, or the like.

As shown in Fig. 1, the platforms A and D denote personal computers. The platform A has a CPU (central processing unit) 11, memory 12, a hard disk drive 13, an input device 14 such as a keyboard, and a display 15 serving as a display device, which are all interconnected together by way of a bus 10. The platform D is substantially identical in construction with the platform A, and hence its detailed illustration and explanation are omitted.

The platforms B and E denotes game machines. The platform B has a CPU 21, memory 22, and an input device 23, which are all interconnected by way of a bus 20. The platform B is connected to a TV 24 serving as a display device. The platform B is connected to the network 2 by way of a network interface 25 provided on the bus 20. The platform E is substantially identical in construction with the platform B, and hence its detailed illustration and explanation are omitted.

The platforms C and F denote portable cellular phones. The platform C comprises a CPU 31, memory 32, an input device 33, and a display 34 serving as a display device, which are all interconnected by way of a bus 30. The platform F is substantially identical in construction with the platform C, and hence its detailed illustration and explanation are omitted.

The constructions of the platforms A through F are mere exemplar illustrations, and platforms having other configurations may be employed.

The server 3 comprises at least a CPU 41, memory 42, and a hard disk drive 43 serving as a storage device, which are all interconnected by way of a bus 40. The server 3 is connected to the network 2 by way of a network interface 44 provided on the bus 40.

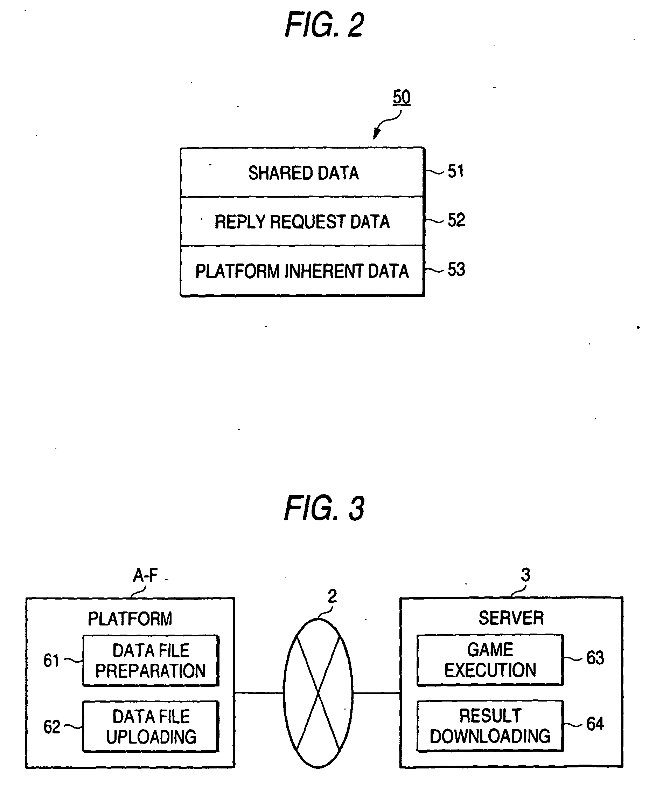

A baseball game application software program loaded from a storage medium (not shown), such as CD-ROM, has been previously installed in the memory 12 of the platform A, in the memory 22 of the platform B, in the memory 32 of the platform C, and in the hard disk 13 of the platform A. The application software program is provided with, as an accessory, a transmission program for uploading a data file 50 shown in Fig. 2 to the server 3. The transmission program may be a well-known program.

Fig. 2 is a diagram showing the configuration of the data file 50 written in the memory 12 of the platform A, that of the data file 50 written in the memory 22 of the platform B, and that of the data file 50 written in the memory 32 of the platform C.

Namely, each of the data files 50 has the same format. More specifically, each of the data files 50 comprises shared data 51, reply request data 52, and the platform inherent data 53. The shared data 51, the reply request data 52, and the platform inherent data 53 have identical headers, and these data sets are each composed of a fixed-length record.

For example, the shared data 51 include a system ID, a game ID, and a user ID. Here, the system ID is a unique ID assigned to a system (e.g., assigned to Konami Corporation). The game ID is an ID assigned to a game to be played by a user (e.g., a baseball game system). The user ID is an ID used for determining a user (player). As will be described later, an E-mail address is preferably used as the user ID, so as to facilitate the identification required when a game result is downloaded to the platforms A through F from the server 3.

The reply request data 52 include flags showing the type of data when a game result is downloaded to the platforms A through F from the server 3, which are set in accordance with the player's wish or the performance of the platform. In the present embodiment, eight flags, b0, b1, b2, b3, b4, b5, b6, and b7, are prepared as the reply request data 52.

Of the flags, flag b0 is relevant to the hitting of a home run. When the player sets flag b0 to "1," data pertaining to home runs that have been hit in the game are downloaded. In contrast, when the player sets flag b0 to "0," data pertaining to home runs are not downloaded.

Flag b1 is relevant to whether to download all the plays that have been conducted in a game. When the player sets flag b1 to "1," data pertaining to all the plays that have arisen during the game are downloaded. In contrast, when the player sets flag b1 to "0," data pertaining to only highlights of the game are downloaded.

Flag b2 is relevant to whether to request detailed information about the game (e.g., the first ball pitch thrown to the first batter in the top of the third inning was a curve ball, and the batter swung wide). When the player sets flag b2 to "1," detailed information is downloaded. When the player sets flag b2 to "0," only the result of the relevant play (e.g., the batter was retired, etc.) is downloaded.

Flag b3 is relevant to whether to request playback information about the game. When the player sets flag b3 to "1," playback information about the game is downloaded. When flag b3 is set to "0," only text is downloaded.

Flags b4 through b7 are backup flags and are intended to be relevant to presence or absence of a request for visual information (e.g., information about orientation of a camera angle from center field to the backstop or information about orientation of a camera angle from a position behind the backstop to center field) or audible information (e.g., information as to whether or not sound is made compatible with surround sound).

In the present embodiment, eight flags are available for the reply request data 52. The number of flags may be increased or decreased. Alternatively, details about the reply request data 52 may be changed so as to differ from those mentioned above. Moreover, the reply request data 52 may be automatically set in agreement with the performance of the platforms A through F. In this case, when the data file 50 is stored in each memory of the platforms A through F, identification of the type of platform may be performed so as to provide suitable flag settings with respect to each of the platforms A through F.

The platform inherent data 53 comprise team data pertaining to baseball players constituting the baseball team, and game history data pertaining to the games that have been played by the baseball team in the past.

Stored in the hard disk drive 43 of the server 3 is a processing program for carrying out a game on the basis of the platform inherent data 53 (particularly team data) uploaded from the platforms A through F. The processing program principally carries out a game by determining inferiority or superiority, by comparing the skills of the players, which assume the form of data, with each other one by one. The processing program is a well-known program and does not constitute the gist of the present invention, and hence its detailed explanation is omitted. The processing program is provided with a transmission program, as an accessory, which downloads data into the platforms A through F. The transmission program may be a well-known program.

Fig. 3 is a diagram showing the functional block of the network server system 1. The functions to be embodied by the network server system 1 include data file preparation 61, data file uploading 62, game execution 63, and result downloading 64. The server 3 executes the processing program stored in the hard disk drive 43 and the respective platforms A through F execute the processing program stored in the memory 12, 22, 32 or the hard disk drive 13, so that the functions shown in this figure are respectively embodied.

The data file preparation 61 is to prepare a data file 50 of a certain format in each of the platforms A through F. The data file uploading 62 is to upload the data file 50 prepared by the data file preparation 61 to the server 3 by way of the network 2. The game execution 63 carries out a game on the basis of the data file 50 in the server 3. The result downloading 64 is to download to the respective platforms A through F a result from execution of a game.

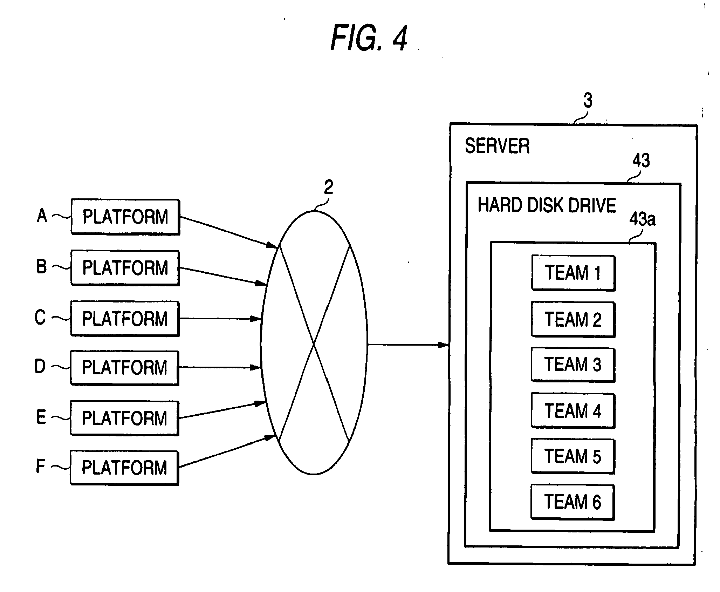

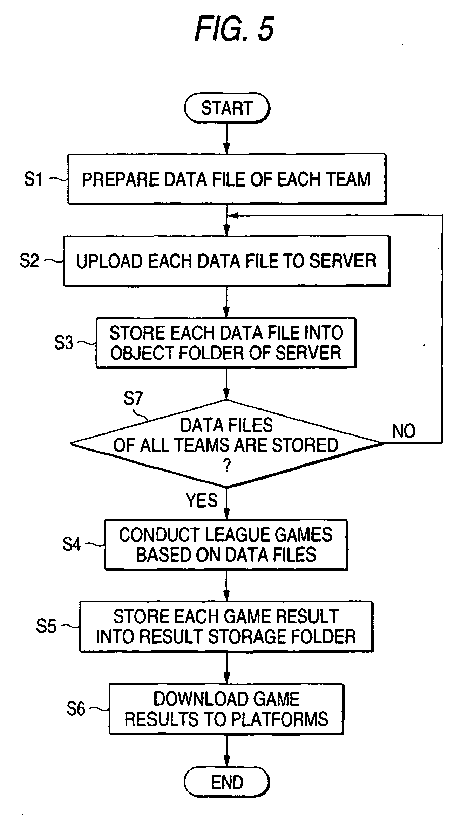

With reference to Fig. 5, there will now be described a manner of playing the game constructed in the manner as mentioned above. First, as shown in Fig. 4, the six platforms A through F and the server 3 are connected to the network 2. The platforms A through F are of different types.

By the data file preparation 61, the first player transforms the ability of a baseball team prepared in the platform A into data (S1). By the data file uploading 62, the thus-prepared data file 50 is uploaded to the server 3 by way of the network 2 (S2). The thus-uploaded data file 50 pertaining to the baseball team of the first player is stored, as "Team 1," in an object folder 43a in the hard disk 43 which is to be processed by the server 3 (S3).

Similarly, by the data file preparation 61, there are prepared, in the form of data, the ability of the baseball team prepared in the platform B of the second player, the ability of the baseball team prepared in the platform C of the third player, the ability of the baseball team prepared in the platform D of the fourth player, the ability of the baseball team prepared in the platform E of the fifth player, and the ability of the baseball team prepared in the platform F.

By the data file uploading 62, the thus-prepared data files 50 are uploaded to the server 3 by way of the network 2. The thus-uploaded data files 50 pertaining to the baseball teams of the second through sixth players are stored in the object folder 43a of the hard disk drive 43 in the server 3 as "Team 2," "Team 3," "Team 4," "Team 5," and "Team 6" (S7).

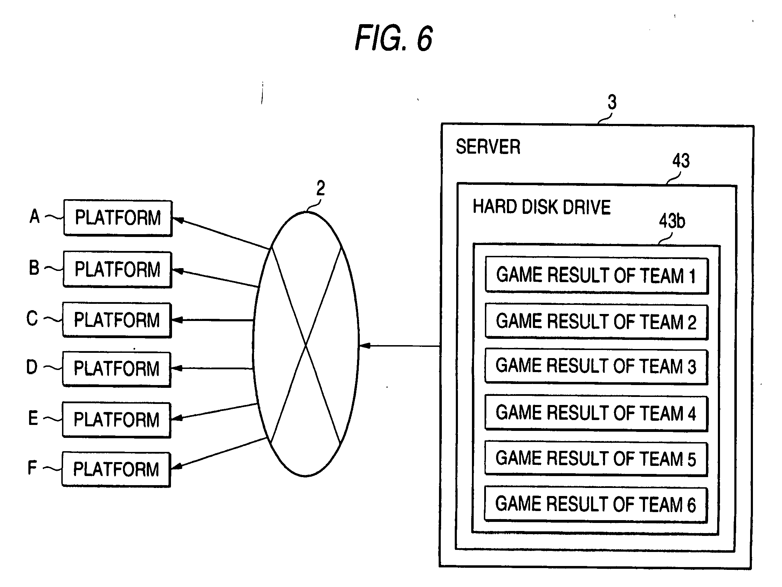

By the game execution 63 of the server 3, there is effected a round of league games consisting of six teams on the basis of the abilities summarized in the respective data files 50, in accordance with the processing program (S4). As shown in Fig. 6, results of the games are stored into a result storage folder 43b of the hard disk drive 43 in the server 3 as "Game Result of Team 1," "Game Result of Team 2," "Game Result of Team 3," "Game Result of Team 4," "Game Result of Team 5," and "Game Result of Team 6" (S5).

By the result downloading 64, the thus-prepared league game results are downloaded into the respective platforms A through F (i.e., to the E-mail addresses, which are the user IDs contained in the data files 50), in accordance with the flag setting of the reply request data 52 in the data files 50 uploaded to the server 3 by the transmission program (S6). By viewing the thus-downloaded data, the respective players can ascertain the game results.

According to the configuration as has been described heretofore, since the respective platforms A through F prepare the data files 50 of identical format and a game is played on the basis of the data files 50, users can enjoy playing a game through use of the platforms A through F of different types.

Since the data sets 51 through 53 are each composed of fixed-length data, the sizes of the data files 50 of identical format remain unchanged. For these reasons, the data files 50 can be handled readily.

Since the user IDs contained in the shared data 51 are E-mail addresses, at the time of downloading of the results to the platforms A through F a determination can be readily made as to which results are to be sent to which of the platforms A through F. Thus, the data files 50 can be downloaded efficiently.

Since desired data can be downloaded by changing only the flag settings in the reply request data 52, the data can be downloaded readily.

The server 3 has the hard disk drive 43 comprising the object folder 43a and the result storage folder 43b. The uploaded data files 50 are stored in the object folder 43a, and the result data produced as a result of execution of a game is stored in the result storage folder 43b. Hence, the uploaded data files 50 do not mix with the result data, within the hard disk drive 43. Uploading of the data file 50 and preservation of the game result are effected, by accessing corresponding folders. Thus, the data files 50 and the results can be efficiently processed.

The present invention is not limited to the embodiment set forth and is susceptible to various modifications within the scope of the invention described in the appended claims. Needless to say, such modifications fall within the scope of the invention. -

The embodiment has described the present invention by taking a baseball game as an example. However, the present invention can also be applied to another simulation game (e.g., a sport game such as a soccer game or a basketball game or an international war game).

The present embodiment employs platforms of different types. Needless to say, the present invention can be used by use of platforms of the same type.

## Claims

1. A network server system (1), comprising:
at least two types of platforms (A-F);
a game management station server (3); and
a network (2), through which the platforms and the game management station server are connected; wherein,
each platform comprises:
a data file provider (61), operable to prepare a data file (50) having a single data format and including reply request data (52), indicating a content of the game result data to be downloaded; and
an uploader (62), operable to upload the prepared data file to the game management station server via the network; and
the game management station server comprises:
a game executer (63) operable to execute a game based on the data file uploaded from each of the platforms; and
a downloader (64), operable to download game result data derived from the game to the respective platforms via the network,
**characterised in that**
the reply request data has a fixed-length record irrespective of the types of the platforms and includes at least one flag which is variable in accordance with a type of each platform.

2. The network server system as set forth in claim 1, wherein the reply request data includes at least another variable flag which is adapted to be set by a player of the game.

3. The network server system as set forth in claim 1, wherein a setting of the at least one flag is adapted to be automatically set in accordance with the type of the platform.

4. The network server system as forth in claim 1, wherein a setting of the at least one flag is adapted to be automatically determined in accordance with performance of each of the platforms.

5. The network server system as set forth in claim 1; wherein:
the game management station server includes a first folder and a second folder; and
the uploaded data files are stored in the first folder and the game result data are stored in the second folder.

6. A method of communicating game data, comprising the steps of:
connecting at least two types of platforms (A-F) and a game management station server (3) via a network (2);
preparing a data file (50) at each of the platforms, based on a single data format including reply request data (52), indicating a content of the game result data to be downloaded;
uploading the prepared data file from each of the platforms to the game management station server via the network;
executing a game in the game management station server, based on the data file uploaded from each of the platforms;
determining the content of game result data to be downloaded based on the reply request data (52); and
downloading game result data derived from the game to the respective platforms via the network,
**characterized in that**:
the reply request data has a fixed-length record irrespective of the types of the platform and includes at least one flag which is variable in accordance with a type of each platform; and
the content of game result data is changed in accordance with the at least one flag, before the downloading step.

7. The game data communicating method as set forth in claim 6, wherein the reply request data includes at least another variable flag which is set by a player of the game.

8. The game data communicating method as set forth in claim 6, wherein the at least one flag is automatically set in accordance with the type of each platform.

9. The game data communicating method as set forth in claim 6, wherein the at least one flag is automatically set in accordance with performance of each of the platforms to which the game result data is downloaded.

10. A computer readable medium having recorded thereon a program for causing at least two types of platforms and a game management station server to execute the game data communicating method as set forth in any one of claims 6 to 9.

## Patentansprüche

1. Netzwerkserversystem (1), umfassend:
wenigstens zwei Arten von Plattformen (A-F);
einen Spielmanagementstationsserver (3); und
ein Netzwerk (2), durch welches die Plattformen und der Spielmanagementstationsserver verbunden sind; wobei
jede Plattform umfaßt:
einen Datenfileprovider bzw. eine Datendateibereitstellungseinrichtung (61), der bzw. die betätigbar bzw. betreibbar ist, um ein Datenfile (50) vorzubereiten, das ein einziges Datenformat aufweist und Antwortaufforderungsdaten (52) beinhaltet, die einen Inhalt der Spielergebnisdaten anzeigen, die herunterzuladen sind; und
eine Upload- bzw. Aufladeeinrichtung (62), die betätigbar bzw. betreibbar ist, um das vorbereitete Datenfile in den Spielmanagementstationsserver über das Netzwerk hinaufzuladen bzw. upzuloaden; und
der Spielmanagementstationsserver umfaßt:
eine Spielausübungseinrichtung (63), die betätigbar bzw. betreibbar ist, um ein Spiel basierend auf dem Datenfile auszuführen, das von jeder der Plattformen hinaufgeladen ist; und
eine Download- bzw. Herunterladeeinrichtung (64), die betätigbar bzw. betreibbar ist, um Spielergebnisdaten, die von dem Spiel abgeleitet sind, zu den entsprechenden Plattformen über das Netzwerk herunterzuladen,
**dadurch gekennzeichnet, daß**
die Antwortaufforderungsdaten eine Aufzeichnung bzw. Inhalt fixierter bzw. feststehender Länge unabhängig von den Arten der Plattformen aufweisen und wenigstens ein Flag beinhalten, welches in Übereinstimmung mit einer Art von jeder Plattform variabel ist.

2. Netzwerkserversystem nach Anspruch 1, wobei die Antwortaufforderungsdaten wenigstens ein weiteres variables Flag beinhalten, welches adaptiert ist, um durch einen Spieler des Spiels gesetzt zu werden.

3. Netzwerkserversystem nach Anspruch 1, wobei ein Setzen des wenigstens einen Flag adaptiert ist, um automatisch in Übereinstimmung mit der Art der Plattform gesetzt zu werden.

4. Netzwerkserversystem nach Anspruch 1, wobei ein Setzen des wenigstens einen Flag adaptiert ist, um automatisch in Übereinstimmung mit einer Leistung bzw. Performance von jeder Plattform bestimmt zu sein.

5. Netzwerkserversystem nach Anspruch 1, wobei:
der Spielmanagementstationsserver einen ersten Folder bzw. Ordner und einen zweiten Ordner beinhaltet; und
die hinaufgeladenen Datenfiles in dem ersten Ordner gespeichert sind und die Spielergebnisdaten in dem zweiten Ordner gespeichert sind.

6. Verfahren zum Übertragen bzw. Kommunizieren von Spieldaten, umfassend die Schritte:
Verbinden von wenigstens zwei Arten von Plattformen (A-F) und einem Spielmanagementstationsserver (3) über ein Netzwerk (2);
Ausbilden bzw. Vorbereiten eines Datenfiles bzw. einer Datendatei (50) an jeder der Plattformen, basierend auf einem einzigen Datenformat, enthaltend Antwortaufforderungsdaten (52), die einen Inhalt der Spielergebnisdaten anzeigen, die herunterzuladen sind;
Aufladen des vorbereiteten Datenfiles von jeder der Plattformen zu dem Spielmanagementstationsserver über das Netzwerk;
Ausführen eines Spiels in dem Spielmanagementstationsserver basierend auf dem Datenfile, das von jeder der Plattformen heraufgeladen wird;
Bestimmen des Inhalts von Spielergebnisdaten, die herunterzuladen sind, basierend auf den Antwortaufforderungsdaten (52); und
Herunterladen von Spielergebnisdaten, die von dem Spiel abgeleitet werden, zu den entsprechenden Plattformen über das Netzwerk,
**dadurch gekennzeichnet, daß**:
die Antwortaufforderungsdaten eine Aufzeichnung bzw. Inhalt fixierter bzw. feststehender Länge unabhängig von den Arten der Plattform aufweisen und
wenigstens ein Flag enthalten, welches in Übereinstimmung mit einer Art von jeder Plattform variabel ist; und
der Inhalt von Spielergebnisdaten in Übereinstimmung mit dem wenigstens einen Flag vor dem Herunterladeschritt verändert wird.

7. Verfahren zum Übertragen von Spieldaten nach Anspruch 6, wobei die Antwortaufforderungsdaten wenigstens ein weiteres variables Flag beinhalten, welches durch einen Spieler des Spiels gesetzt wird.

8. Verfahren zum Übertragen von Spieldaten nach Anspruch 6, wobei das wenigstens eine Flag automatisch in Übereinstimmung mit der Art von jeder Plattform gesetzt wird.

9. Verfahren zum Übertragen von Spieldaten nach Anspruch 6, wobei das wenigstens eine Flag automatisch in Übereinstimmung mit der Leistung bw. Performance von jeder der Plattformen gesetzt wird, auf welche die Spielergebnisarten heruntergeladen werden.

10. Computerlesbares Medium, das darauf ein Programm aufgezeichnet aufweist, um wenigstens zwei Arten von Plattformen und einen Spielmanagementstationsserver zu veranlassen, das Verfahren zum Kommunizieren bzw. Übertragen von Spieldaten auszuführen, wie es in einem der Ansprüche 6 bis 9 ausgeführt ist.

## Revendications

1. Système de serveur de réseau (1) comprenant :
au moins deux types de plates-formes (A-F) ;
un serveur de postes de gestion de jeux (3) ; et
un réseau (2), par lequel les plates-formes et le serveur de postes de gestion de jeux sont connectés ; dans lequel
chaque plate-forme comprend :
un fournisseur de fichiers de données (61), pouvant être utilisé pour préparer un fichier de données (50) ayant un format de données simple et comprenant des données de demande de réponse (52), indiquant un contenu des données de résultat de jeu à télécharger ; et
un dispositif de téléchargement montant (62) pouvant être utilisé pour télécharger le fichier de données préparé vers le serveur de postes de gestion de jeux via le réseau ; et
le serveur de postes de gestion de jeux comprend :
un exécuteur de jeux (63) pouvant être utilisé pour exécuter un jeu basé sur le fichier de données téléchargé depuis chacune des plates-formes ; et
un dispositif de téléchargement descendant (64) pouvant être utilisé pour télécharger des données de résultat de jeu provenant du jeu vers les plates-formes respectives via le réseau,
**caractérisé en ce que** les données de demande de réponse ont un enregistrement de longueur fixe, quel que soit le type de plate-forme, et comprennent au moins un drapeau qui est variable selon le type de chaque plate-forme.

2. Système de serveur de réseau selon la revendication 1, dans lequel les données de demande de réponse comprennent au moins un autre drapeau variable qui est adapté pour être réglé par un joueur du jeu.

3. Système de serveur de réseau selon la revendication 1, dans lequel un réglage dudit au moins un drapeau est adapté pour être automatiquement effectué en fonction du type de plate-forme.

4. Système de serveur de réseau selon la revendication 1, dans lequel un réglage dudit au moins un drapeau est adapté pour être déterminé automatiquement en fonction des performances de chacune des plates-formes.

5. Système de serveur de réseau selon la revendication 1, dans lequel :
le serveur de postes de gestion de jeux comprend un premier dossier et un deuxième dossier ; et
les fichiers de données téléchargés dans le sens montant sont enregistrés dans le premier dossier et les données de résultat de jeu sont enregistrées dans le deuxième dossier.

6. Procédé d'échange de données de jeu, comprenant les étapes consistant à :
connecter au moins deux types de plates-formes (A-F) et un serveur de postes de gestion de jeux (3) via un réseau (2) ;
préparer un fichier de données (50) dans chacune des plates-formes, basé sur un format de données simple comprenant des données de demande de réponse (52), indiquant un contenu des données de résultat de jeu à télécharger ;
télécharger le fichier de données préparé de chacune des plates-formes vers le serveur de postes de gestion de jeux via le réseau ;
exécuter un jeu dans le serveur de postes de gestion de jeux, d'après le fichier de données téléchargé depuis chacune des plates-formes ;
déterminer le contenu des données de résultat de jeu à télécharger dans le sens descendant d'après les données de demande de réponse (52) ; et
télécharger des données de résultat de jeu provenant du jeu vers les plates-formes respectives via le réseau,
**caractérisé en ce que** :
les données de demande de réponse ont un enregistrement de longueur fixe, quel que soit le type de plate-forme, et comprennent au moins un drapeau qui est variable selon le type de chaque plate-forme ; et
le contenu des résultats de jeu est changé selon ledit au moins un drapeau, avant l'étape de téléchargement vers les plates-formes.

7. Procédé d'échange de données de jeu selon la revendication 6, dans lequel les données de demande de réponse comprennent au moins un autre drapeau variable qui est réglé par un joueur du jeu.

8. Procédé d'échange de données de jeu selon la revendication 6, dans lequel ledit au moins un drapeau est réglé automatiquement en fonction du type de chaque plate-forme.

9. Procédé d'échange de données de jeu selon la revendication 6, dans lequel ledit au moins un drapeau est réglé automatiquement en fonction des performances de chaque plate-forme vers laquelle les données de résultat de jeu sont téléchargées.

10. Support lisible par un ordinateur, sur lequel est enregistré un programme destiné à faire exécuter par au moins deux types de plates-formes et un serveur de postes de gestion de jeux le procédé d'échange de données de jeu selon l'une quelconque des revendications 6 à 9.
